Europäisches Patentamt

**European Patent Office**

Office européen des brevets

(11) Publication number : **0 666 676 A2**

(12) # EUROPEAN PATENT APPLICATION

(21) Application number : **95300695.4**

(51) Int. Cl.<sup>6</sup> : **H04M 1/72**

(22) Date of filing : **03.02.95**

(30) Priority : **04.02.94 US 192007**

(43) Date of publication of application :
**09.08.95 Bulletin 95/32**

(84) Designated Contracting States :
**AT BE DE DK ES FR GB GR IE IT LU NL PT SE**

(71) Applicant : **ADVANCED MICRO DEVICES INC.**
**One AMD Place,**
**P.O. Box 3453**
**Sunnyvale, California 94088-3453 (US)**

(72) Inventor : **Hendrickson, Alan F.**
**1801 Kenwood**
**Austin, Texas 78704 (US)**
Inventor : **Peterson, Joseph W.**
**RR6,**
**Box 51P Bluff Trail**
**Austin, Texas 78737 (US)**

(74) Representative : **Sanders, Peter Colin**
**Christopher et al**
**BROOKES & MARTIN**
**High Holborn House**
**52/54 High Holborn**
**London WC1V 6SE (GB)**

(54) **Power management circuit for a digital cordless telephone.**

(57) A power management circuit for a battery-powered apparatus which is designed to sleep during predetermined periods when the apparatus is not in use, which has an oscillator that generates a clock signal therefor, and which has a battery monitoring subcircuit that indicates when a predetermined low battery power state is reached, includes subcircuitry that enables the oscillator to generate a clock signal, and subcircuitry responsive to an indication from the battery monitoring subcircuit that the predetermined low battery power state is reached, which subcircuitry suspends operation of the subcircuitry that enables the oscillator to generate a clock signal.

EP 0 666 676 A2

Jouve, 18, rue Saint-Denis, 75001 PARIS

The subject matter of this application is related to that in the following European applications based on corresponding US applications and being filed concurrently herewith:

| US Serial No. | European Application No. | Our Ref. |
|---|---|---|
| 08/191,949 | | PCCS/TT0411/SMP |
| 08/191,940 | | PCCS/TT0412/SMP |
| 08/191,994 | | PCCS/TT0413/SMP |
| 08/912,046 | | PCCS/TT0414/SMP |
| 08/192,057 | | PCCS/TT0415/SMP |
| 08/192,009 | | PCCS/TT0416/SMP |
| 08/191,948 | | PCCS/TT0417/SMP |
| 08/191,818 | | PCCS/TT0418/SMP |

The subject matter of the application is also related to that in our copending European applications: 93305465.2 (TT0139), 93305458.7 (TT0140), 93305450.4 (TT0141), 93305457.9 (TT0142), 93305466.0 (TT0143), 93305459.5 (TT0144), 93305482.7 (TT0145), 93305454.6 (TT0146), 93305461.1 (TT0147), 93305456.1 (TT0148), 93305449.6 (TT0149) and 93305453.8 (TT0150).

The subject matter of each of the aforesaid concurrently filed and copending applications is hereby incorporated in the present application by this reference thereto.

The present invention relates to circuitry for conserving battery power in electronic apparatus. More particularly, the present invention relates to circuitry for conserving power in devices which consume handset battery power or which enable other devices to consume handset battery power.

In complementary metal oxide semiconductor (CMOS) digital electronics, power consumption is dictated primarily by the frequency of signal transitions from 1 to 0 and from 0 to 1. In synchronous systems, of which the preferred exemplary embodiment of the present invention is one, such transitions may occur only at predefined moments in time, controlled by a periodic digital signal known as a clock. The clock itself may be controlled so that no transitions occur, resulting in a so-called "static state", wherein there is minimal power consumption. During this static state the synchronous circuit loses the ability to respond to stimulus.

The clock is generally produced by an analog circuit called an oscillator. Therefore, enabling or disabling the oscillator can effectively control power consumption and device functionality. The characteristics of oscillators include a requisite start-up time, defined as the length of time required for the circuit to achieve sustainable oscillation after being enabled, and a warm-up time, which is loosely defined as the time required for the oscillation to stabilize at its intended frequency.

In certain electronic devices, such as battery-operated handset portions of cordless telephones, low power is achieved by using sleep states when the device is not otherwise in use for communication. The sleep state may be defined as a period of about 0.5 to about 1.3 seconds in which the handset device is brought to an extremely low power level to maximize the battery life. At the end of each sleep period, the handset will generally return temporarily to a higher power state in order to detect requests for establishing a communication state. Should no request be found, the handset will again perform the sleep cycle.

When battery levels become too low, failure of CMOS devices specified to operate only within certain limits will occur. The consequences of marginal power supply in CMOS devices may include faulty logical circuit operation resulting in erroneous signal output from the chip. The CMOS chip in turn may control radio transmission and may therefore generate spurious radio frequency emissions, in violation of certain regulatory agency rules and standards.

Based upon the foregoing, it should be understood and appreciated that low battery protection and sleep period control are two aspects of cordless telephone handsets and like apparatus that must be well controlled. At the same time, because "real estate" in handsets is limited and because inefficient and duplicative efforts increase cost, it is important that aspects like low battery protection and sleep period control be efficiently controlled. Ideally, one would like a common control for both aspects, to maximize efficiency and minimize cost. It is a shortcoming and deficiency of the prior art that such a common solution for low battery protection and sleep period control in cordless telephone handsets and like apparatus has not heretofore been developed.

We shall describe a circuit that overcomes the shortcoming and deficiency mentioned above by combining low battery protection and sleep period control based on the common solution of oscillator control. More specifically, we shall describe a power management circuit for a battery-powered apparatus which is designed to sleep during predetermined periods when the apparatus is not in use, which has an oscillator that generates a clock signal therefor, and which has a battery monitoring subcircuit that indicates when a predetermined low battery power state is reached. The power management circuit includes subcircuitry that enables the oscillator to generate a clock signal; and subcircuitry responsive to an indication from the battery monitoring subcircuit that the predetermined low battery power state is reached, which subcircuitry suspends operation of the subcircuitry that enables the oscillator to generate a clock signal.

In addition, the oscillator may be coupled to the power management circuit to provide a clock signal thereto, the battery-powered apparatus may include a plurality of synchronous devices, and the oscillator may be coupled to each of the plurality of synchronous devices to provide a clock signal thereto.

We shall also describe a method of managing power in a clock-driven, battery-powered apparatus, the method including the steps of determining when the battery power of the battery-powered apparatus reaches a predetermined low power level; and upon determining that the predetermined low power level is reached, disabling the clock.

Accordingly, we provide a system that allows sharing of one crystal among several devices to reduce manufacturing costs.

We also provide a system that guarantees extended sleep operation without illegal radio transmission under low battery conditions.

Other objects, advantages, and novel features of the present invention will become apparent from the following detailed description when considered with the accompanying drawings in which, by way of example only:

FIG. 1 is a block diagram of a preferred exemplary embodiment of the present invention; and

FIG. 2 is a state machine diagram for a preferred exemplary embodiment of the present invention.

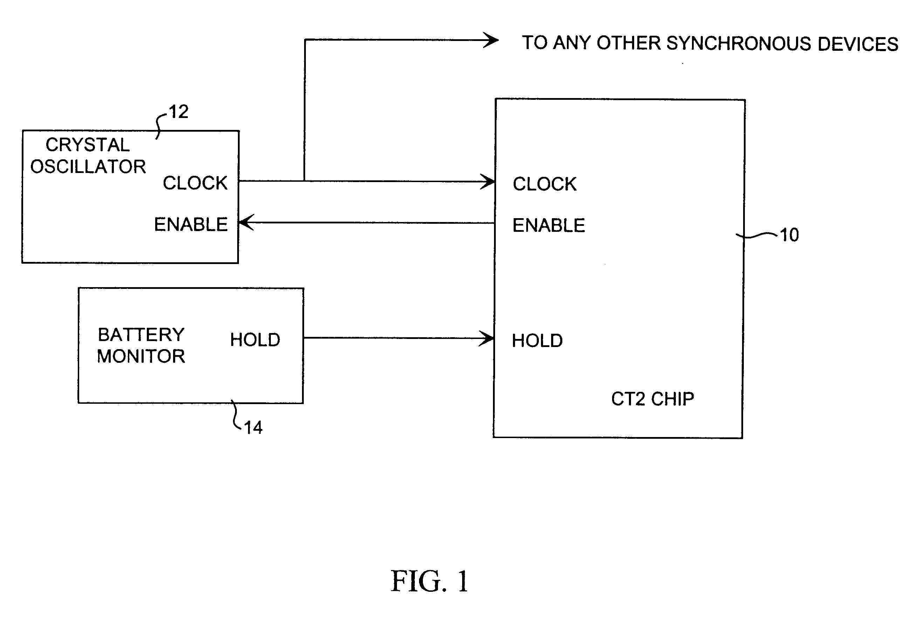

Referring now to the drawings wherein like or similar elements are designated with identical reference numerals throughout the several views and, more particularly, to FIG. 1, there is shown a block diagram of a integrated circuit (IC) including a presently preferred exemplary embodiment of the present invention (which IC is labeled "CT2 Chip" 10), together with certain elements with which the IC 10 may interact.

All of the elements depicted in FIG. 1 may be considered to be part of a handset for a digital cordless telephone. In such a case, the IC 10 may control a number of handset functions other than those specifically discussed herein. As will become clear from the discussion which follows, part of the value of embodiments of the present invention resides in their level of integration.

More specifically, in FIG. 1 there is depicted an oscillator (labeled "CRYSTAL") 12, a battery monitor 14, and the aforementioned cordless telephone generation 2 (CT2) chip 10 in which the presently preferred exemplary embodiment of the present invention is incorporated.

The crystal 12 may be the clock source for the entire handset, in which case the presently preferred exemplary embodiment of the present invention can successfully place all synchronous devices in the handset in a low-power mode. Moreover, since crystals can be expensive, the ability of all devices to share one crystal reduces manufacturing cost.

The battery monitor 14 asserts a HOLD signal when the battery level gets too low to guarantee device, e.g., handset, functionality. This inhibits the device from causing errors which may result in illegal radio transmissions. Typically, battery monitors are designed to operate at voltage supply levels well below those of the circuits they protect.

As previously mentioned, the presently preferred exemplary embodiment of the present invention combines low battery protection and sleep period control, based on the common solution of oscillator control. In general, embodiments of the present invention do this by determining when the battery power reaches a predetermined low power level; and upon determining that the predetermined low power level is reached, disabling the oscillator 12. Further details are set forth immediately below.

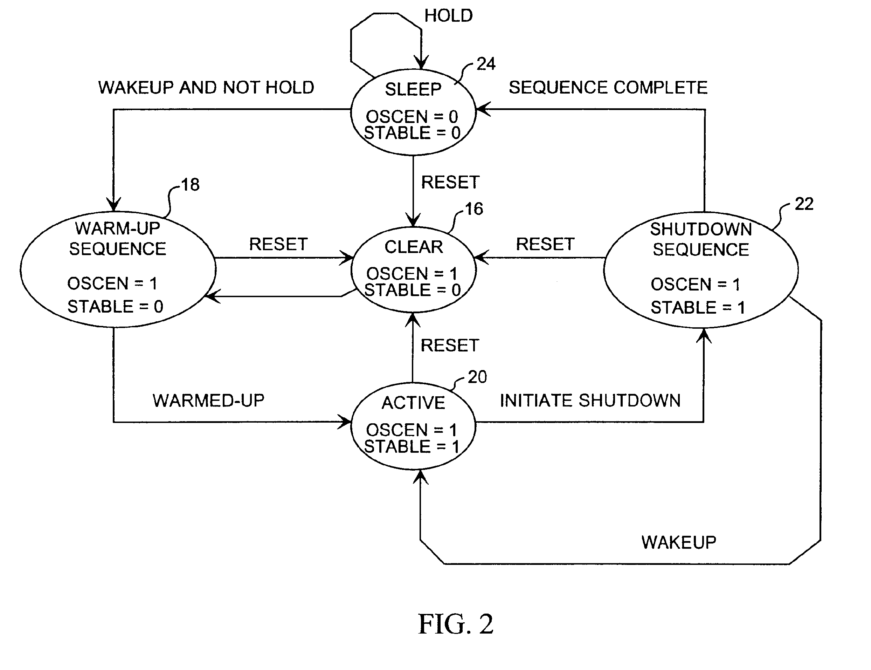

Regarding sleep period control in embodiments of the present invention, the sleep period may be controlled by two digital signals -- an oscillator enable (OSCEN) signal and a stable (STABLE) signal -- responsive to the state machine shown in FIG. 2, which state machine includes five states as follows:

| | STATE | OSCEN | STABLE |
|---|---|---|---|
| 1 | Clear | 1 | 0 |
| 2 | Warm-up Sequence | 1 | 0 |
| 3 | Active | 1 | 1 |
| 4 | Shutdown Sequence | 1 | 1 |
| 5 | Sleep State | 0 | 0 |

When high, the OSCEN signal enables operation of the oscillator 12. When the OSCEN is low the oscillator 12 is turned off. The STABLE signal allows synchronous circuits to respond to the oscillator-driven clock when 1, and disables them when 0.

The clear state (designated with reference numeral 16 in FIG. 2) is the default power-up state of the device. Upon exiting the clear state 16, the state machine enters the warm-up sequence.

The warm-up sequence (designated with reference numeral 18 in FIG. 2) is a period, defined by the terminal count of a digital counter, during which the device counts oscillator periods to determine when the oscillator 12 has completed start-up and warm-up. This state is used every time the oscillator 12 transitions from the disabled to the enabled condition, including initial application of power and at the end of each sleep period.

The active state (designated with reference numeral 20 in FIG. 2) is achieved after warm-up is complete. In this state 20 all synchronous circuits are allowed to respond to the now stable oscillator-driven clock signal. This is the state used by the handset for communication and for determining whether to initiate communication.

The shutdown sequence state (designated with reference numeral 22 in FIG. 2), which is initiated by software command, brings the device to a known state assuring error-free operation while entering and exiting the sleep state.

The sleep state (designated with reference numeral 24 in FIG. 2) entails disabling all circuits responsive to clocks for minimum power consumption. The sleep state does not inhibit all asynchronous circuits (circuits not driven by clocks), which is a key in a preferred embodiment of the present invention.

Continuing to refer to FIG. 1, it may be seen that the state machine depicted therein is responsive to various inputs: RESET; WARMED-UP; INITIATE SHUTDOWN; SEQUENCE COMPLETE; WAKEUP; and HOLD.

RESET causes the state machine to enter the clear state 16 from any of the other four states 18, 20, 22, 24. WARMED-UP indicates that a warm-up counter has reached its terminal count. INITIATE SHUTDOWN causes the state machine to exit the active state 20 and enter the shutdown sequence state 22. The INITIATE SHUTDOWN signal is controlled by software in the presently preferred exemplary embodiment of the present invention. It may also be caused by a circuit detecting a marginal battery level.

The SEQUENCE COMPLETE input indicates that the device has safely reached a known state and is ready to enter a static mode. WAKEUP causes the state machine to exit a static state or to abort the shutdown sequence. WAKEUP is caused by an asynchronous event, perhaps by expiration of a time constant representing the sleep period, or by a device user pressing a handset key to initiate communication.

Regarding low battery protection in embodiments of the present invention, in the presently preferred exemplary embodiment of the present invention, INITIATE SHUTDOWN is caused by a software command to enter sleep mode, whether because sleep mode was normally scheduled or because the software became aware of marginal battery levels.

In the presently preferred exemplary embodiment of the present invention, HOLD is driven by a device (i.e., the battery monitor 14) which detects low battery voltage. When the battery voltage is low, HOLD is asserted, and the device is unable to produce spurious radio emissions. Secondarily, since the oscillator 10 is not allowed to begin oscillation (and hence to drive a clock), power consumption remains low, so that the marginal battery is not taxed by a periodic, high-power consuming exit from the sleep state 24.

Ordinarily, once the state machine is in sleep mode (i.e., in state 24) and HOLD is asserted, the device cannot resume active operation until the battery level returns high, presumably either by recharge or replacement of the batteries.

One possible application of the present invention is, as has been stated, an integrated circuit for a cordless telephone handset and base unit, for example, such as the integrated circuit disclosed in our aforesaid copending applications 93305465.2, 93305458.7, 93305450.4, 93305466.0, 93305459.5, 93305482.7, 93305461.1, 93305456.1, 93305449.6 and 93305453.8.

Based upon all of the foregoing, it should now be fully understood and appreciated that the present invention combines low battery protection and sleep period control, based on the common solution of oscillator control. More specifically, the present invention provides a power management circuit for a battery-powered apparatus which is designed to sleep during predetermined periods when the apparatus is not in use, which has an oscillator that generates a clock signal therefor, and which has a battery monitoring subcircuit that indicates when a predetermined low battery power state is reached. According to the teachings of the present invention, such a power management circuit includes subcircuitry that enables the oscillator to generate a clock signal; and subcircuitry responsive to an indication from the battery monitoring subcircuit that the predetermined low battery power state is reached, which subcircuitry suspends operation of the subcircuitry that enables the oscillator to generate a clock signal. It should also be fully understood and appreciated that the present invention also provides a method of managing power in a clock-driven, battery-powered apparatus. According to the teachings of the present invention, such a method includes the steps of determining when the battery power of the battery-powered apparatus reaches a predetermined low power level; and upon determining that the predetermined low power level is reached, disabling the clock. The provided power management circuit and provided method of managing power can allow sharing of one crystal among several devices to reduce manufacturing cost and, further, when incorporated into or practiced by certain communications devices, they can guarantee extended sleep operation without illegal radio transmission under low battery power.

As is clearly seen, the present invention is a significant improvement in the art. The present invention is believed to be especially effective when configured and employed as described herein, however, those skilled in the art will readily recognize that numerous variations and substitutions may be made in the invention and its use and configuration to achieve substantially the same results as achieved by the embodiments and, in particular, the preferred embodiment expressly described herein. Each of those variations is intended to be included in the description herein and forms a part of the present invention. The foregoing detailed description is, thus, to be clearly understood as being given by way of illustration and example only, the spirit and scope of the present invention being limited solely by the appended claims.

## Claims

1. In a battery-powered apparatus which is designed to sleep during predetermined periods when the apparatus is not in use, which has an oscillator that generates a clock signal therefor, and which has a battery monitoring subcircuit that indicates when a predetermined low battery power state is reached, a power management circuit comprising:

   subcircuitry that enables said oscillator to generate a clock signal; and

   subcircuitry responsive to an indication from said battery monitoring subcircuit that said predetermined low battery power state is reached, which subcircuitry suspends operation of said subcircuitry that enables said oscillator to generate a clock signal.

2. A power management circuit as recited in claim 1, wherein said oscillator is coupled to said power management circuit to provide a clock signal thereto.

3. A power management circuit as recited in claim 1, wherein said battery-powered apparatus comprises a plurality of synchronous devices, and wherein said oscillator is coupled to each of said plurality of synchronous devices to provide a clock signal thereto.

4.    A power management circuit as recited in claim 1, wherein said power management circuit is incorporated into a digital cordless telephone.

5.    A method of managing power in a clock-driven, battery-powered apparatus, said method comprising the steps of:

determining when the battery power of said battery-powered apparatus reaches a predetermined low power level; and

upon determining that said predetermined low power level is reached, disabling said clock.

FIG. 1

FIG. 2